# EUROPÄISCHE PATENTSCHRIFT

(11) **EP 1 578 628 B1**
(45) Veröffentlichungstag und Bekanntmachung des Hinweises auf die Patenterteilung: **22.08.2007**
(21) Anmeldenummer: 03779827.9
(22) Anmeldetag: 31.10.2003
(51) Int. Cl.: B60H 1/00, B60H 1/32

(54) **KLIMAANLAGE FÜR EIN FAHRZEUG UND ZUGEHÖRIGES BETRIEBSVERFAHREN**
AIR CONDITIONING SYSTEM FOR A VEHICLE AND ASSOCIATED OPERATING METHOD
SYSTEME DE CLIMATISATION POUR UN VEHICULE ET PROCEDE DE FONCTIONNEMENT ASSOCIE

(30) Priorität: 20.12.2002 DE 10260933
(43) Veröffentlichungstag der Anmeldung: 28.09.2005
(73) Patentinhaber: Behr GmbH & Co. KG, 70469 Stuttgart (DE)
(72) Erfinder: BURK, Roland, 70469 Stuttgart (DE); FEUERECKER, Günther, 70567 Stuttgart (DE); KEMLE, Andreas, 74321 Bietigheim-Bissingen (DE); KRAUSS, Hans-Joachim, 70567 Stuttgart (DE); KUNBERGER, Ottokar, 70825 Korntal-Münchingen (DE); STRAUSS, Thomas, 73274 Notzingen (DE); STUCK, Hans-Martin, 76703 Kraichtal (DE)
(74) Vertreter: Grauel, Andreas
(86) Internationale Anmeldenummer: PCT/EP2003/012139
(87) Internationale Veröffentlichungsnummer: WO 2004/058525

(56) Entgegenhaltungen:
- EP-A- 0 621 147
- EP-A- 1 262 347
- FR-A- 2 766 762
- US-A- 6 041 849

## Beschreibung

Die Erfindung bezieht sich auf eine Klimaanlage mit einem Strömungskanal für einen zu konditionierenden Luftstrom und mit einem in diesem Strömungskanal angeordneten Wärmetauscher sowie in einem im Heiz- oder Kühlmodus betreibbaren Kreislauf zur Zirkulation eines Fluids.

Eine derartige Klimaanlage wird insbesondere in einem Kraftfahrzeug eingesetzt. Der Kältemittelfluss wird hierbei üblicherweise von einem in den Kältemittelkreislauf geschalteten Verdichter oder Kompressor erzeugt, welcher unmittelbar vom Fahrzeugmotor angetrieben wird.

Moderne Niedrigverbrauchsfahrzeug liefern üblicherweise zu wenig Abwärme oder Heizenergie, um den Fahrzeuginnenraum in im Bedarfsfall auch kurzer Zeit auf komfortable Temperaturen aufheizen zu können. Insbesondere eine Scheibenentfrostung dauert bedingt durch die geringe Abwärme zu lange. Um dies zu vermeiden, ist es beispielsweise aus der EP 0 960 756 bekannt, einen sogenannten thermodynamischen Dreiecksprozess zu schalten, bei welchem ein separater Wärmetauscher zur zusätzlichen Beheizung des Luftstroms und somit zur Konditionierung vorgesehen ist. Auch aus der DE 3 907 201 ist ein zusätzlicher Wärmetauscher zur Aufheizung des Luftstroms bekannt. Zusätzlich ermöglicht die aus der EP 0 733 504 bekannte Klimaanlage, das im Kältemittelkreislauf zirkulierende Fluid oder Kältemittel zu steuern und zu regeln.

Nachteilig bei den genannten Klimaanlagen ist, dass diese entweder für einen Kreislauf mit Kohlendioxid als Fluid oder Kältemittel nicht geeignet sind und damit die Heizleistung derartiger Klimaanlagen begrenzt ist oder, dass sie zusätzliche Komponenten, insbesondere aufwendige und kostenintensive Umschalt- oder Absperrventile benötigen.

Ein Kohlendioxid-Kreislauf, der üblicherweise mit einem saugseitig angeordneten Sammler oder Zwischenspeicher vorgesehen ist, der im allgemeinen nur im Kühlmodus durchströmt wird, ist in seiner Heizleistung begrenzt, wobei diese zudem mit abnehmender Umgebungstemperatur geringer wird. Dies resultiert aus der Abhängigkeit der Dichte des vom Verdichter angesaugten Dampfes von der Umgebungstemperatur. Dies führt zu einer Verringerung des geförderten Fluidmassenstroms oder Kältemittelmassenstroms und somit auch zu einer Reduzierung der Heizleistung mit abnehmender Umgebungstemperatur. Darüber hinaus kann sich im Heizmodus im nicht durchströmten Zwischenspeicher Kältemittel und Öl ansammeln, was dazu führt, dass der den Heizmodus repräsentierende Kreislauf mit zu wenig Fluid oder Kältemittel durchströmt wird. Um dies zu vermeiden, wird daher auch bei einem Kohlendioxid-Kreislauf der zirkulierende Fluidstrom bedarfsgerecht gesteuert. Dies führt wiederum zu dem Einsatz von aufwendigen und kostenintensiven Regel- und Steuerventilen sowie zusätzlicher Leitungen.

Der Erfindung liegt daher die Aufgabe zugrunde, eine besonders einfache Klimaanlage für ein Kraftfahrzeug anzugeben, die eine möglichst gute Konditionierung eines Luftstroms mit hinreichend guter Heizleistung erlaubt. Der Erfindung liegt ferner die Aufgabe zugrunde, ein Verfahren für den Betrieb einer solchen Klimaanlage anzugeben.

Bezüglich eines Verfahrens zum Betreiben einer Klimaanlage wird diese Aufgabe erfindungsgemäß gelöst durch die Merkmale des Patentanspruchs 1.

Bezüglich einer Klimaanlage wird die Aufgabe erfindungsgemäß gelöst durch die Merkmale des Anspruchs 16.

Die abhängigen Ansprüche betreffen vorteilhafte Aus- und/oder Weiterbildungen der Erfindung.

Der Hauptgedanke der Erfindung besteht darin, einen Kreislauf mit einem Fluid zur Konditionierung eines Luftstroms in einem Heizmodus derart zu steuern, dass der Ansaugdruck eines Verdichters einen durch die Umgebungstemperatur bedingten Sättigungsdruck im Kreislauf zumindest teilweise übersteigt, wobei der Kreislauf im Heizmodus vorzugsweise in einem rechtsläufigen Dreiecksprozess betrieben wird, wobei eine Antriebsleistung des Verdichters mittels eines Wärmeübertragers vollständig in Wärme umgewandelt und an den in den Fahrzeuginnenraum geführten Luftstrom übertragen und somit zur Konditionierung des Luftstroms verwendet wird.

Bei einer besonders vorteilhaften Weiterbildung des Verfahrens ist das Fluid im Kreislauf im Heizmodus auf mindestens einen aktiven Teil und mindestens einen passiven Teil aufteilbar.

Der Betrieb in einem rechtsläufigen Dreiecksprozess hat den Vorteil, dass ein hoher Ansaugdruck und somit ein großer Massenstrom im Kreislauf vorhanden ist. Beim erfindungsgemäßen Verfahren wird ein Zwischenspeicher in den Heizmodus einbezogen, wobei das Fluid, beispielsweise ein Kältemittel, aus dem Wärmeübertrager, beispielsweise ein Heizelement, dem ohnehin im Kreislauf vorhandenen Zwischenspeicher, beispielsweise ein Niederdrucksammler, zugeführt, um diesen vor dem Ansaugen durch den Verdichter zu durchströmen.

Durch eine derartige druckabhängige Steuerung des Fluids in einzelnen Bereichen des Kreislaufs, insbesondere in einem Kältemittelkreislaufs, wird die Fluidmenge im aktiven Teil des Kreislaufes erhöht. Dabei kann je nach Art und Ausführung der Klimaanlage, insbesondere durch entsprechende Steuerungs- und Regelungsverfahren der vorhandenen Komponenten bei Bedarf angesammeltes Kältemittel zurückgewonnen werden, indem es in den als aktiven Teil des Kreislaufs überführt wird. Eine derartige Steuerung und Regelung der Klimaanlage ermöglicht eine von der Umgebungstemperatur weitgehend unabhängige Steuerung und Regelung der Heizleistung. Insbesondere durch gezieltes Aus- und Einlagern von Kältemittel (= Fluid) vom passiven bzw. in den passiven Teil des Kreislaufs kann der im aktiven Teil des Kreislaufs zirkulierende Kältemittelstrom hinsichtlich einer vorgegebenen Heizleistung eingestellt und optimiert werden. Eine derart einfache Steuerung und Regelung des Kältemittelstroms erfordert außer den ohnehin vorhandenen Absperrvorrichtungen, Steuer- und/oder Regelventilen keine zusätzlichen Komponenten.

Bei einer Ausführungsform ist der Ansaugdruck in einem Bereich, von 10 Bar bis 110 Bar steuerbar.

Bei einer weiteren Ausführung des Verfahrens wird mit Aktivierung des Heizmodus das Fluid aus dem passiven Teil des Kreislaufes in den aktiven Teil des Kreislaufes geführt. Zusätzlich oder alternativ kann ein Schwellwert für den Ansaugdruck im aktiven Teil des Kreislaufes vorgegeben sein, bei dessen Unterschreitung das Fluid ebenfalls aus dem passiven Teil des Kreislaufes in den aktiven Teil des Kreislaufes geführt wird.

Zur Überführung des Fluides aus dem passiven Teil des Kreislaufes in den aktiven Teil des Kreislaufes wird der im Heizmodus betriebene Kreislauf in zumindest kurzzeitig in den Kühlmodus oder in einen linksläufigen Dreiecksprozess umgeschaltet. Das Umschalten in den linksläufigen Dreiecksprozess hat gegenüber dem Umschalten in den Kühlmodus den Vorteil, dass der linksläufige Dreiecksprozess ebenfalls einen Heizprozess ist, der bei einem niedrigeren Ansaugdruck als beim rechtsläufigen Dreiecksprozess betrieben wird.

Der Kreislauf wird bis zum Unterschreiten eines einstellbaren Schwellwertes im Kühlmodus oder im linksläufigen Dreiecksprozess betrieben, wobei der Kreislauf nach Unterschreiten des Schwellwertes wieder in den Heizmodus umgeschaltet wird. Der Schwellwert kann beispielsweise für einen Ansaugdruck und/oder für einen Hochdruck und/oder für eine Heißgastemperatur am Verdichter vorgegeben werden.

Bei einer vorteilhaften Ausführungsform ist der Schwellwert des Ansaugdruckes mindestens 3 bar, vorzugsweise 5 bar, unter dem durch die Umgebungstemperatur bedingten Wert des Sättigungsdrucks eingestellt.

Als Alternative kann der Kreislauf auch für eine vorgebbare Zeitdauer im Kühlmodus oder im linksläufigen Dreiecksprozess betrieben werden, wobei der Kreislauf nach Ablauf der Zeitdauer ebenfalls wieder in den Heizmodus umgeschaltet wird.

Zur Steigerung der Heizleistung kann nach dem Umschalten in den Kühlmodus oder in den linksläufigen Dreiecksprozess zusätzlich der Luftstrom durch den Verdampfer und/oder durch einen Gaskühler reduziert werden.

Da bei handelsüblichen elektrisch betätigten 2/3 Wegeventilen die Magnetkraft nicht ausreicht, um das Ventil zu schalten wenn der Differenzdruck zu groß ist, wird vor der Rückkehr in den Heizmodus im Kreislauf ein Druckausgleich durchgeführt.

Der Kreislauf der Klimaanlage für ein Fahrzeug im Heizmodus umfaßt bei einer Ausführungsform einen Wärmeübertrager, einen Zwischenspeicher, sowie einen Verdichter zur Zwischenspeicherung bzw. zum Verdichten des Fluids, wobei der Verdichter mit einem Ansaugdruck betrieben ist, der größer ist, als der durch die Umgebungstemperatur bedingte Sättigungsdruck im Kreislauf.

Bei einer vorteilhaften Ausgestaltung der Erfindung ist ein im Strömungskanal des Luftstroms sekundärseitig und im Kreislauf primärseitig geschalteter Verdampfer vorgesehen, wobei der Verdampfer im Kreislauf ausgangsseitig mit dem Zwischenspeicher unter Zwischenschaltung eines Rückschlagventils verbunden sein kann.

Bei einer vorteilhaften Ausführung der Klimaanlage ist das Volumen des Verdampfer zur Fluidaufnahme kleiner ist als das Speichervolumen des Zwischenspeichers, wobei das Verhältnis des Speichervolumens des Zwischenspeichers zum Volumen des Verdampfers beispielsweise im Bereich von 2:1 bis 20:1, vorzugsweise im Bereich zwischen 2:1 bis 10:1, liegt.

Zum überleiten des Fluids aus dem passiven Teil in den aktiven Teil des Kreislaufes und umgekehrt sind die beiden Teile des Kreislaufes durch mindestens eine Steuereinrichtung miteinander verbunden, wobei die Steuereinrichtung geöffnet wird, um die Fluidmenge im aktiven Teil des Kreislaufes zu erhöhen oder zu verringern.

Bei einer weiteren vorteilhaften Ausführungsform ist der Verdichter ausgangsseitig über ein Steuermittel und eine zugehörige steuerbare Verbindungsleitung eingangsseitig mit dem Verdampfer verbunden, wobei nach Öffnen des Steuermittels gasförmiges Fluid in den Verdampfer gelangt und das im Verdampfer befindliche flüssige Fluid aus dem Verdampfer in den aktiven Teil des Kreislaufes drängt.

Nachfolgend werden Ausführungsbeispiele der Erfindung anhand einer Zeichnung näher erläutert. Darin zeigen:
- Fig. 1 bis 3: in schematischer Darstellung alternative Ausführungsformen für eine Klimaanlage mit einem im Kühl- oder Heizmodus betreibbaren Kreislauf zur Rückführung eines ausgangsseitig von einem Verdichter abströmenden und über einen Zwischenspeicher ansaugseitig in den Verdichter strömenden Fluids,
- Fig. 4 und 5: Thermodynamische Diagramme für den Betrieb der Klimaanlagen gemäß Figur 3.

Einander entsprechende Teile sind in den Figuren mit den gleichen Bezugszeichen versehen.

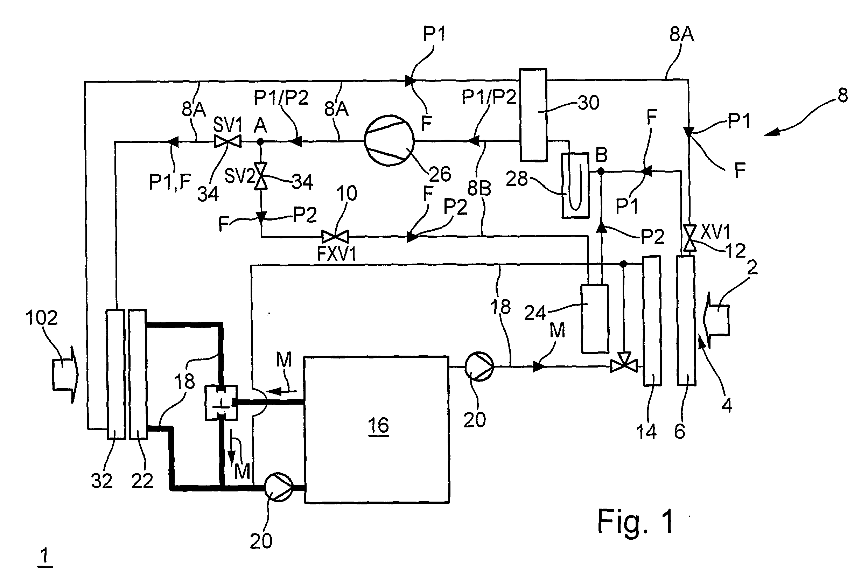

Die in Figur 1 schematisch dargestellte Klimaanlage 1 umfasst einen von einem Luftstrom 2 durchströmten Strömungskanal 4. Im Strömungskanal 4 ist dabei ein dessen Querschnitt ausfüllender Verdampfer 6, insbesondere ein Kältemittelverdampfer, angeordnet. Der Verdampfer 6 ist dabei zur Kühlung des in den Strömungskanal 4 einströmenden und den Verdampfer 6 sekundärseitig durchströmenden Luftstroms 2 an einen einen Teilkreislauf 8A bildenden Kreislauf 8 zur Zirkulation eines Fluids F angeschlossen. Als Fluid F dient beispielsweise Kohlendioxid oder ein anderes Kältemittel. Der Kreislauf 8 wird aufgrund seiner Funktionalität auch als Kältemittelkreislauf bezeichnet. Der Teilkreislauf 8A wird im weiteren aufgrund seiner zum Heizen passiven Führung des Fluids F als passiver Teilkreislauf 8A bezeichnet.

Der Verdampfer 6 ist nach Art eines gewöhnlichen, in Fahrzeug-Klimaanlagen eingesetzten Kältemittelverdampfers (vgl. z.B. Kraftfährtechnisches Taschenbuch/Bosch [Chefredakteur H. Bauer], 23. Aufl., Braunschweig (Viebig), 1999, S. 777 ff.) ausgebildet, bei dem dem durchströmenden Luftstrom 2 durch Verdampfung des als Fluid F bezeichneten Kältemittels Wärme entzogen wird. Zur Regulierung des durch den Verdampfer 6 strömenden Fluids F ist dem Verdampfer 6 eingangsseitig ein im Kältemittelkreislauf 8 angeordnetes Expansionsventil 12, welches dicht schließen kann, vorgeschaltet.

In Strömungsrichtung des Luftstroms 2 gesehen ist dem Verdampfer 6 ein Heizkörper 14 nachgeschaltet. Der Heizkörper 14 dient der Aufheizung und somit Temperierung des Luftstroms 2 mittels vom Motor 16 erwärmten Kühlmittels M. Dazu ist der Heizkörper 14 sekundärseitig in einen Kühlmittelkreis 18 geschaltet. In den Kühlmittelkreislauf 18 ist eingangs- und ausgangsseitig des Motors 16 jeweils eine Kühlmittelpumpe 20 zur Steuerung des Kühlmittelstroms geschaltet. Zusätzlich zur Abkühlung des Kühlmittels M wird dieses über einen im Luftstrom 102 angeordneten Kühler 22 durch Frischluft gekühlt.

Zur weiteren Aufheizung des Luftstroms 2 ist darüber hinaus im Strömungskanal 4 dem Heizkörper 14 ein Wärmeübertrager 24 nachgeschaltet. Der Wärmeübertrager 24 ist als Heizelement ausgebildet und sekundärseitig in einen weiteren Teilkreislauf 8B des Kreislaufs 8 geschaltet. Der Teilkreislauf 8B bewirkt dabei eine aktive Steuerung des Fluids F und wird daher im weiteren als aktiver Teilkreislauf 8B bezeichnet. Zur Steuerung des Fluidstroms ist zweckmäßigerweise ein Expansionsventil 10 zwischen dem Verdichter 26 und dem Wärmeübertrager 24 in den aktiven Teilkreislauf 8B geschaltet.

Im Kühlmodus der Klimaanlage 1 durchläuft ein Kältemittel den passiven Teilkreislauf 8A entsprechend der Flusspfeile P1 des Fluids F und somit den Verdampfer 6 sowie einen durch den Motor 16 angetriebenen Verdichter 26. Das Fluid F wird in flüssiger Form an den Verdampfer 6 herangebracht und eingeführt. Beim Durchlauf durch den Verdampfer 6 verdampft das Fluid F und entzieht dabei dem durch den Verdampfer 6 strömenden Luftstrom 2 über entsprechende, nicht näher dargestellte Wärmeübertragsflächen Wärme. Das Fluid F, z.B. ein gasförmiges Kältemittel wie Kohlendioxid, verlässt den Verdampfer 6 und wird im passiven Teilkreislauf 8A unter Zwischenschaltung eines Zwischenspeichers 28 und eines Wärmetauschers 30 einem Gaskühler 32 zur Abkühlung zugeführt.

Im Heizmodus durchläuft das Kältemittel den aktiven Teilkreislauf 8B entsprechend den Flusspfeilen P2 des Fluids F, wobei das Fluid F ausgangsseitig vom Verdichter 26 dem als Heizelement ausgebildeten Wärmeübertrager 24 zugeführt und über den als Niederdrucksammler ausgebildeten Zwischenspeicher 28 und den in diesem Modus deaktivierten Wärmetauscher 30 ansaugseitig dem Verdichter 26 wieder zugeführt wird. Zur Umschaltung der Strömung des Fluids F vom aktiven Teilkreislauf 8B zum passiven Teilkreislauf 8A oder umgekehrt sind in den betreffenden Teilkreisläufe 8B bzw. 8A Sperrvorrichtungen 34 angeordnet.

Der im Heizmodus aktive Teilkreislauf 8B ermöglicht gemäß der vorliegenden Erfindung, dass die Antriebsleistung des Verdichters 26 in Wärme zur zusätzlichen Heizung und Temperierung des Luftstroms 2 mittels des Wärmeübertragers 24 umgewandelt wird, indem das Fluid F vom Wärmeübertrager 24 über den Zwischenspeicher 28 dem Verdichter 26 ansaugseitig wieder zugeführt wird.

Um, wie in der Figur 1 dargestellt, zusätzliche Komponenten für die Klimaanlage 1 zu vermeiden, wird dabei ein Saugdruck des Verdichters 26 derart eingestellt, dass der Saugdruck ein durch die Umgebungstemperatur bedingten Sättigungsdruck zumindest teilweise übersteigt. Die Einstellung des Saugdrucks wird dabei in besonders einfacher Weise anhand von konstruktiven Merkmalen der Komponenten der Klimaanlage 1 bewirkt. Beispielsweise wird dazu ein den Verdampfer 6 repräsentierendes Speicher- oder Verdampfervolumen derart klein ausgeführt, dass die im Zwischenspeicher 28 (= Sammler) gesammelte oder gespeicherte Fluidmenge oder Kältemittelmenge nicht vollständig im kalten Verdampfer 6 kondensieren kann, wobei die Absperrvorrichtung 12, beispielsweise ein Expansionsventil ein weiteres Abströmen in den ebenfalls kalten Gaskühler 32 verhindert. Alternativ kann der Zwischenspeicher 28 ein entsprechend großes Speichervolumen aufweisen, welches wesentlich größer als das Verdampfervolumen ist, wobei das Volumen des Verdampfers beispielsweise im Bereich von 50 bis 500 ccm und das Volumen des Sammlers im Bereich von 200 bis 2000 ccm liegt, so dass ein Verhältnis des Volumen des Sammlers zum Volumen des Verdampfers im Bereich von 2:1 bis 20:1 vorzugsweise 2:1 bis 10:1 gewählt werden kann.

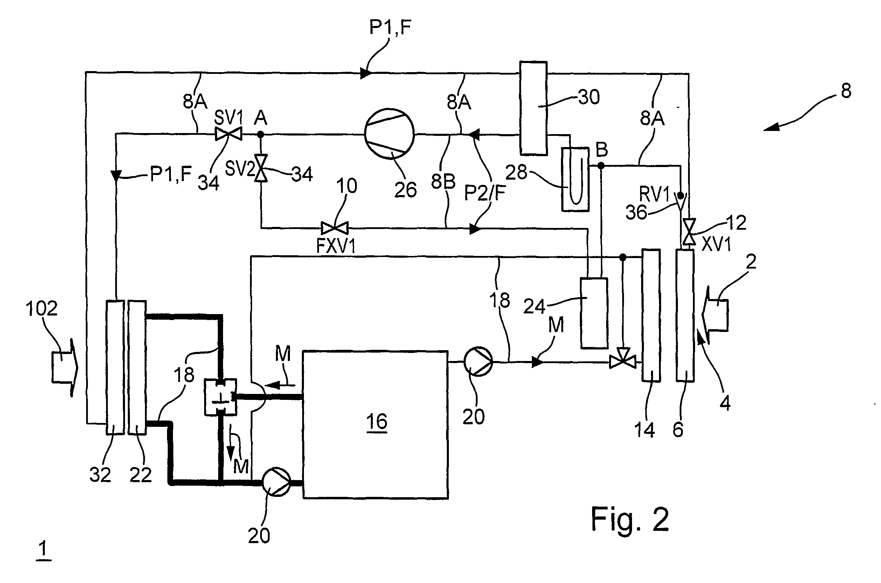

Alternativ oder zusätzlich kann die Klimaanlage 1, wie in Figur 2 dargestellt, um ein im passiven Teilkreislauf 8A ausgangsseitig am Verdampfer 6 angeordnetes Rückschlagventil 36 ergänzt werden. Das Rückschlagventil 36 verhindert dabei, dass das Fluid F oder das Kältemittel aus dem aktiven Teilkreislauf 8B in die wesentlich kälteren und damit unter geringerem Druck im Heizmodus stehenden Kreislaufkomponenten - dem Verdampfer 6 und dem Gaskühler 32 - des passiven Teilkreislaufs 8A abströmen kann. Bedingt durch die allein aufgrund der konstruktiven Merkmale der Komponenten bewirkten Nutzung der Verdichterleistung zur Aufheizung des Luftstroms 2, ist eine genaue Steuerung des Fluidstroms im aktiven Teilkreislauf 8B nicht möglich.

Beispielsweise ist aber nach einem mehrmaligen Abstellen oder einem zu langen Abstellen des Fahrzeugs eine genaue Steuerung und Einstellung der Zirkulation des Fluids F im Heizmodus wünschenswert, wenn nicht gar erforderlich, da sich hierbei zu viel Fluid F in Komponenten - dem Verdampfer 6 oder dem Gaskühler 32 - des passiven Teilkreislaufs 8A sammelt und somit die Leistungsfähigkeit des Kreislaufs 8 deutlich begrenzt ist. Im anderen Fall, bei welchem zuviel Fluid F im aktiven Teilkreislauf 8B strömt, kann der Saugdruck unter Umständen auf einen zu hohen Wert ansteigen, wodurch der Verdichter 26 beschädigt werden kann.

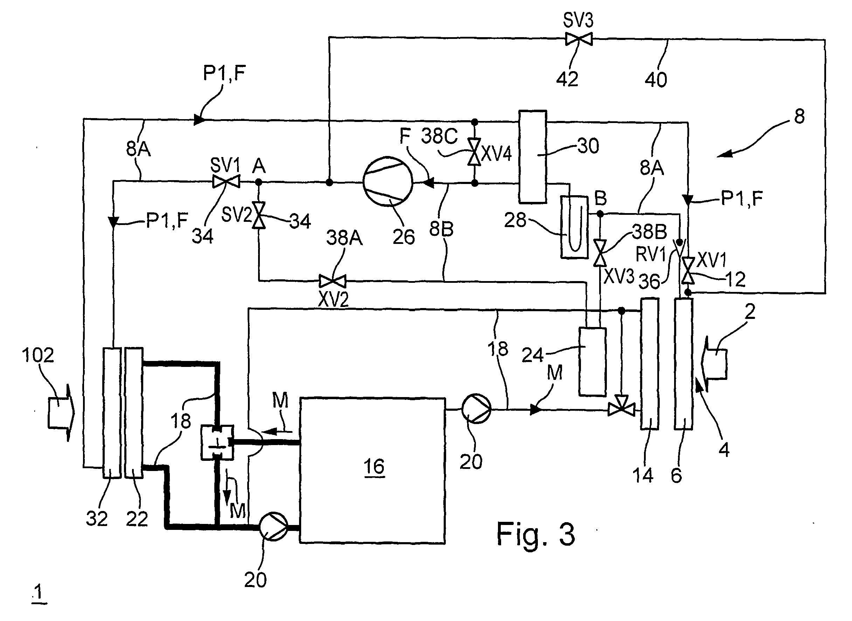

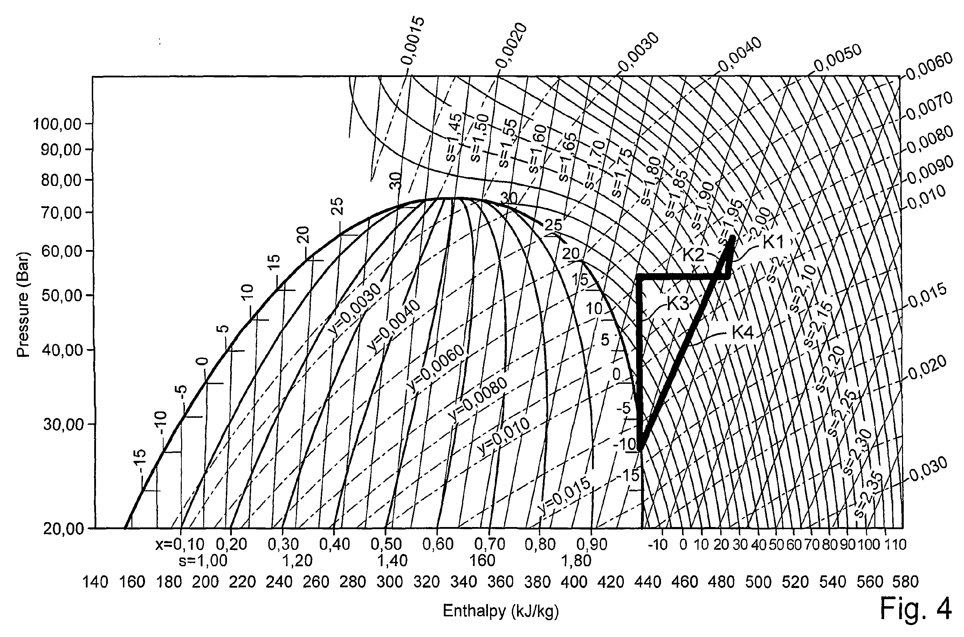

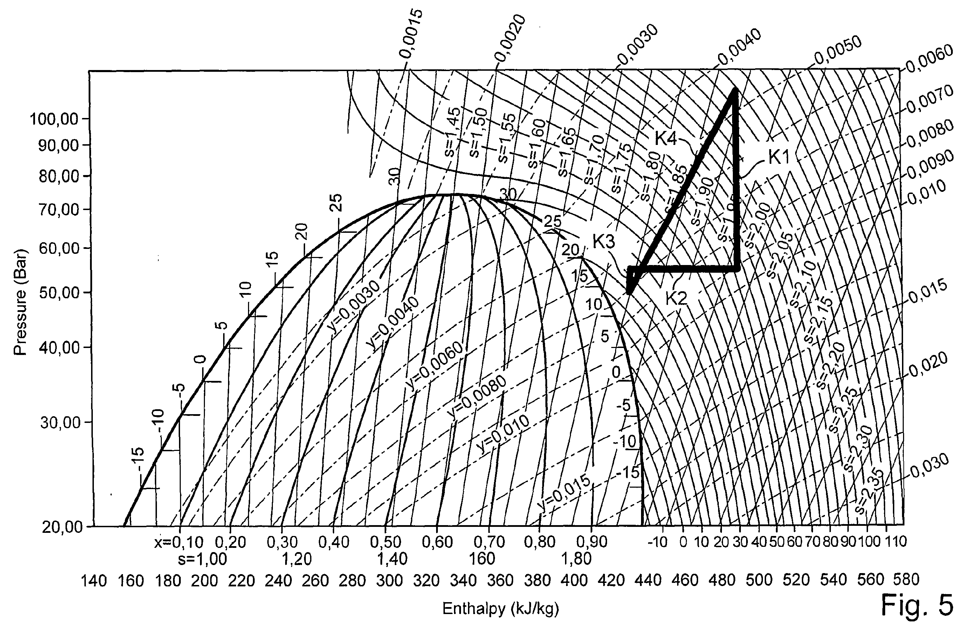

Hierzu sind, wie in Figur 3 dargestellt, zwei Steuereinrichtungen 38A und 38B im aktiven Teilkreislauf 8B angeordnet. Die Steuereinrichtungen 38A und 38B sind beispielsweise als Regelventile oder Expansionsventile ausgebildet. Je nach Art und Ansteuerung der Steuereinrichtungen 38A und 38B sind verschiedene Betriebsprozesse der Klimaanlage 1 im Heizmodus einstellbar, welche anhand der thermodynamischen Diagramme gemäß Figuren 4 und 5 näher erläutert werden.

Figur 4 zeigt dabei ein Druck-Enthalpie-Diagramm für einen sogenannten linksläufigen Dreiecksprozess, Figur 5 ein Druck-Enthalpie-Diagramm für einen sogenannten rechtsläufigen Dreiecksprozess. Gemäß dem Betriebsverfahren der Klimaanlage 1 nach Figur 4 wird das aus dem Verdichter 26 strömende Fluid F mit hohem Druck mittels der Steuereinrichtung 38A gemäß der Kurve K1 nur unwesentlich gedrosselt und unmittelbar dem Wärmeübertrager 24 zugeführt, wobei das Fluid F gemäß Kurve K2 seine Wärme an den den Wärmeübertrager 24 primärseitig durchströmenden Luftstrom 2 abgibt. Vom Wärmeübertrager 24 wird das Fluid F über die Steuereinrichtung 38B, welche gemäß der Kurve K3 das Fluid F auf den Ansaugdruck drosselt, dem Zwischenspeicher 28 und dem Verdichter 26 wieder zugeführt. Hierzu ist die als Expansionsventil ausgeführte Steuereinrichtung 38A möglichst vollständig geöffnet, so dass der Druckverlust gering ist und an der ebenfalls als Expansionsventil ausgebildeten Steuereinrichtung 38B der vorwiegende Druckabbau ausgeführt wird. Die Kurve K4 stellt die mittels des Verdichters 26 bewirkte Druckerhöhung des Fluidstroms dar.

Durch Änderung der Öffnungsweite oder -grade der Steuereinrichtungen 38A bzw. 38B kann der linksläufige Dreiecksprozess gemäß Figur 4 in einen rechtsläufigen Dreiecksprozess gemäß Figur 5 umgeschaltet werden. Beispielsweise erfolgt eine Umschaltung vom rechtsläufigen Dreiecksprozess in den linksläufigen Dreiecksprozess in dem Fall, dass im aktiven Teilkreislauf 8B zu wenig Fluid F oder Kältemittel, z.B. sogenanntes R744-Kältemittel, strömt. Beim rechtsläufigen Dreiecksprozess erfolgt gemäß Figur 5, Kurve K1 der wesentliche Druckabbau an der Steuereinrichtung 38A, während die Steuereinrichtung 38B vollständig geöffnet ist und somit nur noch einen geringen Druckabbau auf den Wert des Ansaugdrucks bewirkt gemäß Kurve K3. Daraus resultierend, liegen bei einem Vergleich des links- mit dem rechtsläufigen Dreiecksprozess die Werte der Ansaugdrücke beim rechtsläufigen Dreieckprozess gemäß Figur 5 höher als beim linksläufigen Dreiecksprozess gemäß Figur 4. Hierdurch kann der Verdichter 26 einen größeren Massenstrom des Fluids F fördern, wodurch zusätzliche Heizleistung mittels des Wärmeübertragers 24 erzeugt wird. Schaltet man in den Linksläufigen Dreiecksprozess, sinkt der Ansaugdruck erheblich im Vergleich zum Rechtsläufigen. Fällt dieser Ansaugdruck beim Linksläufigen unterhalb des durch die Umgebungstemperatur bedingten Druck im passiven Anlagenteil, kommt es zu einer Kältemittelverlagerung vom passiven Teil in den aktiven.

Für den Fall, dass der aktive Teilkreislauf 8B von zuviel Fluid F durchströmt wird, ist eine weitere Steuervorrichtung 38C zwischen den beiden Teilkreisläufen 8A und 8B geschaltet. Durch Öffnen der Steuervorrichtung 38C kann dann das Fluid F entsprechend dosiert in den passiven Teilkreislauf 8A zum Gaskühler 32 oder zum Verdampfer 6 geführt werden.

In einem weiteren Anwendungsfall wird zur Beseitigung einer Ansammlung von Fluid F oder Kältemittel, z.B. nach einem längeren Stillstand, das Fahrzeug zu Fahrtbeginn beim Anlaufen des Verdichters 26 in einem vorgegebenen Zeitbereich im Kühlmodus und somit im passiven Teilkreislauf 8A mit maximal geöffneter Absperrvorrichtung 12 gefahren, um eine hinreichend gute Durchströmung des Gaskühlers 32, des Verdampfers 6 und des Zwischenspeichers 28 zu bewirken. Hierdurch wird eine Ansammlung von Fluid F im Verdampfer 6 oder auch im Gaskühler 32 zumindest teilweise beseitigt, indem eine ausreichende Menge des Fluids F, insbesondere von flüssigen Kältemittel, in den Zwischenspeicher 28 oder Sammler geführt und gespeichert wird. Anschließend wird die Klimaanlage 1 gemäß eines der oben beschriebenen Dreiecksprozesse nach Figur 4 oder 5 betrieben. Kommt es hierbei wieder zu einer Ansammlung von Fluid F im passiven Teilkreislauf 8A, so wird der Heizmodus (auch Zuheizbetrieb genannt) des aktiven Teilkreislaufs 8B durch kurzzeitiges Umschalten auf den Kühlmodus des passiven Teilkreislaufs 8A, welcher das Fluid F wieder in den Zwischenspeicher 28 führt, unterbrochen.

Zusätzlich zur Steuerung der Klimaanlage 1 gemäß den Dreiecksprozessen nach Figur 4 und 5 mittels der oben dargelegten Auslegung der Komponenten und/oder der Anordnung der Steuereinrichtungen 38A bis 38C kann der Verdichter 26 ansaugseitig mit einem nicht näher dargestellten Drucksensor versehen sein. Der Drucksensor dient dabei der weitgehend genauen Bestimmung der Fluidmenge im aktiven Teilkreislauf 8B, wodurch ein gezieltes und somit einstellbares Ein- oder Auslagern des Fluids F zwischen den beiden Teilkreisläufen 8A bzw. 8B ermöglicht ist. Bei einer anderen Alternative ist der Verdichter 26 ausgangsseitig über eine steuerbare Verbindungsleitung 40 eingangsseitig mit dem Verdampfer 6 verbunden ist.

### Bezugszeichenliste

- 1: Klimaanlage
- 2: Luftstrom
- 4: Strömungskanal
- 6: Verdampfer
- 8: Kältemittelkreislauf
- 8A: passiver Teilkreislauf
- 8B: aktiver Teilkreislauf
- 10: Expansionsventil
- 12: dicht schließendes Expansionsventil
- 14: Heizkörper
- 16: Motor
- 18: Kühlmittelkreislauf
- 20: Kühlmittelpumpe
- 22: Kühler
- 24: Wärmeübertrager
- 26: Verdichter
- 28: Zwischenspeicher
- 30: Wärmetauscher
- 32: Gaskühler
- 34: Sperrvorrichtungen
- 36: Rückschlagventil
- 38A, 38B, 38C: Steuereinrichtung
- 40: Verbindungsleitung
- 42: Steuervorrichtung
- 102: Luftstrom

- F: Fluid
- M: Kühlmittel
- K2, K3: Kurve
- P1, P2: Flusspfeil

## Patentansprüche

1. Verfahren zum Betreiben einer Klimaanlage (1) eines Fahrzeugs, bei dem ein Fluid (F) zur Konditionierung eines Luftstroms (2) in einem im Kühl- oder Heizmodus betreibbaren Kreislauf (8) zirkuliert, wobei der Kreislauf im Heizmodus einen Verdichter (26), einen Wärmeübertrager (24) und einen Zwischenspeicher (28) umfaßt, **dadurch gekennzeichnet, dass** der Kreislauf derart gesteuert wird, dass der Ansaugdruck des Verdichters (26) einen durch die Umgebungstemperatur bedingten Sättigungsdruck im Kreislauf zumindest teilweise übersteigt.

2. Verfahren nach Anspruch 1, **dadurch gekennzeichnet, dass** der Heizmodus einem Betrieb des Kreislaufes in einem rechtsläufigen Dreiecksprozess entspricht, bei dem der Ausgang des Verdichters mit einem Eingang eines Steuerventils 38a, das ausgangsseitig mit dem Wärmeübertrager (24) verbunden ist, dem ausgangsseitig der Zwischenspeicher (28) und der Eingang des Verdichters (26) nachgeschaltet sind.

3. Verfahren nach Anspruch 1 oder 2, **dadurch gekennzeichnet, dass** der Ansaugdruck in einem Bereich von 10 Bar bis 110 Bar steuerbar ist.

4. Verfahren nach einem der Ansprüche 1, 2 oder 3, **dadurch gekennzeichnet, dass** das Fluid (F) im Kreislauf im Heizmodus auf mindestens einen aktiven Teil (8B) und mindestens einen passiven Teil (8A) aufteilbar ist.

5. Verfahren nach einem der Ansprüche 1 bis 4, **dadurch gekennzeichnet, dass** mit Aktivierung des Heizmodus das Fluid (F) aus dem passiven Teil des Kreislaufes (8A) in den aktiven Teil des Kreislaufes (8B) geführt wird.

6. Verfahren nach einem der Ansprüche 1 bis 5, **dadurch gekennzeichnet, dass** bei Unterschreitung eines vorgebbaren Schwellwertes für den Ansaugdruck im aktiven Teil des Kreislaufes (8B) das Fluid (F) aus dem passiven Teil des Kreislaufes (8A) in den aktiven Teil des Kreislaufes (8B) geführt wird.

7. Verfahren nach einem der Ansprüche 5 oder 6, **dadurch gekennzeichnet, dass** zur Überführung des Fluides aus dem passiven Teil des Kreislaufes in den aktiven Teil des Kreislaufes der im Heizmodus betriebene Kreislauf in den Kühlmodus umgeschaltet wird.

8. Verfahren nach einem der Ansprüche 5 oder 6, **dadurch gekennzeichnet, dass** zur Überführung des Fluides aus dem passiven Teil des Kreislaufes in den aktiven Teil des Kreislaufes der im Heizmodus betriebene Kreislauf in einen linksläufigen Dreiecksprozess umgeschaltet wird.

9. Verfahren nach einem der Ansprüche 7 oder 8, **dadurch gekennzeichnet, dass** der Kreislauf bis zum Unterschreiten eines einstellbaren Schwellwertes im Kühlmodus oder im linksläufigen Dreiecksprozess betreibbar ist, wobei der Kreislauf nach Unterschreiten des Schwellwertes wieder in den Heizmodus umschaltbar ist.

10. Verfahren nach Anspruch 9, **dadurch gekennzeichnet, dass** der Schwellwert für einen Ansaugdruck und/oder für einen Hochdruck und/oder für eine Heißgastemperatur am Verdichter vorgebbar ist.

11. Verfahren nach Anspruch 9, **dadurch gekennzeichnet, dass** der Schwellwert des Ansaugdruckes mindestens 3 bar, vorzugsweise 5 bar, unter dem durch die Umgebungstemperatur bedingten Wert des Sättigungsdrucks eingestellt ist.

12. Verfahren nach einem der Ansprüche 7 bis 11, **dadurch gekennzeichnet, dass** der Kreislauf für eine vorgebbare Zeitdauer im Kühlmodus oder im linksläufigen Dreiecksprozess betreibbar ist, wobei der Kreislauf nach Ablauf der Zeitdauer wieder in den Heizmodus umschaltbar ist.

13. Verfahren nach einem der Ansprüche 7 bis 12, **dadurch gekennzeichnet, dass** nach dem Umschalten in den Kühlmodus oder in den linksläufigen Dreiecksprozess ein Luftstrom (2) durch den Verdampfer reduzierbar ist.

14. Verfahren nach einem der Ansprüche 7 bis 13, **dadurch gekennzeichnet, dass** nach dem Umschalten in den Kühlmodus oder in den linksläufigen Dreiecksprozess ein Luftstrom durch einen Gaskühler reduzierbar ist.

15. Verfahren nach einem der Ansprüche 10 bis 14, **dadurch gekennzeichnet, dass** nach der Rückkehr in den Heizmodus ein Druckausgleich im Kreislauf durchführbar ist.

16. Klimaanlage (1) für ein Fahrzeug mit einem im Kühl- oder Heizmodus betreibbaren Kreislauf (8) zur Zirkulation eines Fluids (F) zur Konditionierung eines Luftstroms (2), und *die Klimaanlage derart ausgebildet und eingerichtet ist, dass* der Kreislauf im Heizmodus einen Wärmeübertrager (24), einen Zwischenspeicher (28) sowie einen Verdichter (26) zur Zwischenspeicherung bzw. zum Verdichten des Fluids (F) umfasst, **dadurch gekennzeichnet, dass** *sich am Verdichter ein Ansaugdruck ergibt,* der größer ist, als der durch die Umgebungstemperatur bedingte Sättigungsdruck im Kreislauf (8).

17. Klimaanlage (1) nach Anspruch 16, **dadurch gekennzeichnet, dass** der ein im Strömungskanal (4) des Luftstroms (2) sekundärseitig und im Kreislauf (8) primärseitig geschalteter Verdampfer (6) vorgesehen ist, der im Kreislauf (8) ausgangsseitig mit dem Zwischenspeicher (28) unter Zwischenschaltung eines Rückschlagventils (36) verbunden ist.

18. Klimaanlage (1) nach Anspruch 17, **dadurch gekennzeichnet, dass** das Volumen des Verdampfer (6) zur Fluidaufnahme kleiner ist als das Speichervolumen des Zwischenspeichers (28).

19. Klimaanlage (1) nach Anspruch 18, **dadurch gekennzeichnet, dass** das Verhältnis des Speichervolumens des Zwischenspeichers zum Volumen des Verdampfers im Bereich von 2:1 bis 20:1, vorzugsweise im Bereich zwischen 2:1 bis 10:1, liegt.

20. Klimaanlage (1) nach einem der Ansprüche 16 bis 19, bei der zwischen dem Wärmeübertrager (24) und dem Zwischenspeicher (28) eine Steuereinrichtung (38B) angeordnet ist.

21. Klimaanlage (1) nach einem der Ansprüche 16 bis 20, bei der dem Verdichter (26) ansaugseitig ein Drucksensor zugeordnet ist.

22. Klimaanlage (1) nach einem der Ansprüche 16 bis 21, bei der der Kreislauf (8) in mindestens einen aktiven und mindestens einen passiven Teil unterteilt ist.

23. Klimaanlage (1) nach Anspruch 22, bei der aktive Teil mittels einer weiteren Steuereinrichtung (38C) mit dem passiven Teil verbunden ist, wobei die Steuereinrichtung (38C) geöffnet wird, wenn die Fluidmenge im aktiven Teil des Kreislaufes einen vorgebbaren Schwellwert übersteigt.

24. Klimaanlage (1) nach einem der Ansprüche 19 bis 23, bei der ausgangsseitig der Verdichter (26) über ein Steuermittel (42) und zugehörige steuerbare Verbindungsleitung (40) eingangsseitig mit dem Verdampfer (6) verbunden ist, wobei nach Öffnen des Steuermittels gasförmiges Fluid (F) in den Verdampfer gelangt und flüssiges Fluid (F) aus dem Verdampfer in den aktiven Teil (8B) des Kreislaufes drängt.

## Claims

1. A process for operating an air conditioning system (1) for a vehicle in which a fluid (F) for conditioning an air flow (2) circulates in a circuit (8) which can be operated in cooling or heating mode, in heating mode the circuit comprising a compressor (26), a heat exchanger (24) and a temporary storage device (28),
**characterised in that**
the circuit is controlled in such a manner that the intake pressure of the compressor (26) at least partially exceeds a saturated vapour pressure conditional upon the ambient temperature.

2. A process in accordance with claim 1,
**characterised in that**
the heating mode corresponds to the circuit being operated in a right-handed triangular process in which the output of the compressor is connected to an input of a control valve (38a) which is connected on the output side to the heat exchanger (24) the output side of which is in turn connected downstream to the temporary storage device (28) and the input of the compressor (26).

3. A process in accordance with claim 1 or 2,
**characterised in that**
the intake pressure can be controlled within a range of 10 bar to 110 bar.

4. A process in accordance with one of claims 1, 2 or 3,
**characterised in that**
in heating mode the fluid (F) in the circuit can be divided into at least one active part (8B) and at least one passive part (8A).

5. A process in accordance with one of claims 1 to 4,
**characterised in that**
when heating mode is activated the fluid (F) is carried from the passive part of the circuit (8A) into the active part of the circuit (8B).

6. A process in accordance with one of claims 1 to 5,
**characterised in that**
when the intake pressure in the active part of the circuit (8B) falls below a predetermined threshold value, the fluid (F) is carried out of the passive part of the circuit (8A) into the active part of the circuit (8B).

7. A process in accordance with one of claims 5 or 6,
**characterised in that**
in order to transfer the fluid from the passive part of the circuit into the active part of the circuit, the circuit which is being operated in heating mode is switched to cooling mode.

8. A process in accordance with one of claims 5 or 6,
**characterised in that**
in order to transfer the fluid from the passive part of the circuit into the active part of the circuit, the circuit which is being operated in heating mode is switched to a left-handed triangular process.

9. A process in accordance with one of claims 7 or 8,
**characterised in that**
the circuit can be operated in cooling mode or in the left-handed triangular process until the intake pressure falls below an adjustable threshold value, it being possible to switch back to heating mode once the intake pressure falls below the threshold value.

10. A process in accordance with claim 9,
**characterised in that**
the threshold value can be predetermined at the compressor for an intake pressure and/or for a high pressure and/or for a hot gas temperature.

11. A process in accordance with claim 9,
**characterised in that**
the threshold value of the intake pressure is set at least 3 bar, preferably 5 bar below the value of the saturated vapour pressure determined conditional upon the ambient temperature.

12. A process in accordance with one of claims 7 to 11,
**characterised in that**
the circuit can be operated in cooling mode or in the left-handed triangular process for a predetermined period of time, it being possible to switch the circuit back to heating mode at the end of said period.

13. A process in accordance with one of claims 7 to 12,
**characterised in that**
after the switch to cooling mode or the left-handed triangular process an air flow (2) can be reduced by the evaporator.

14. A process in accordance with one of claims 7 to 13,
**characterised in that**
after the switch to cooling mode or the left-handed triangular process an air flow (2) can be reduced by a gas cooler.

15. A process in accordance with one of claims 10 to 14,
**characterised in that**
after the return to heating mode it is possible to carry out pressure compensation in the circuit.

16. An air conditioning system (1) for a vehicle having a circuit (8) which can be operated in cooling mode or heating mode for the circulation of a fluid (F) to condition an air flow (2), the air conditioning system being designed and configured in such a manner that in heating mode the circuit comprises a heat exchanger (24), a temporary storage device (28) and a compressor (26) for the temporary storage and compression of the fluid (F)
**characterised in that**
there is at the compressor an intake pressure greater than that saturated vapour pressure conditional upon the ambient temperature in the circuit (8).

17. An air conditioning system (1) in accordance with claim 16,
**characterised in that**
there is provided an evaporator (6) which is positioned on the secondary side of the flow channel (4) of the air flow (2) and on the primary side of the circuit (8) and which is connected on the output side in the circuit (8) via a return valve (36) to the temporary storage device (28).

18. An air conditioning system (1) in accordance with claim 17,
**characterised in that**
the fluid intake volume of the evaporator (6) is smaller than the storage volume of the temporary storage device (28).

19. An air conditioning system (1) in accordance with claim 18,
**characterised in that**
the ratio of the storage volume of the temporary storage device (28) to the volume of the evaporator lies within a range of 2:1 1 to 20:1, preferably within a range of 2:1 to 10:1.

20. An air conditioning system (1) in accordance with one of claims 16 to 19,
in which there is a control device (38B) positioned between the heat exchanger (24) and the temporary storage device (28).

21. An air conditioning system (1) in accordance with one of claims 16 to 20,
in which a pressure sensor is assigned to the intake sign of the compressor (26).

22. An air conditioning system (1) in accordance with one of claims 16 to 21,
in which the circuit (8) is divided into at least one active and at least one passive part.

23. An air conditioning system (1) in accordance with claim 22,
in which the active part is connected to the passive part by means of a further control device (38C), said control device (38C) being opened when the fluid quantity in the active part of the circuit exceeds a predetermined threshold value.

24. An air conditioning system (1) in accordance with one of claims 19 to 23,
in which the output side of the compressor (26) is connected by a control means (42) and associated controllable connection line (40) to the input side of the evaporator (6) and once the control means has been opened gaseous fluid (F) enters the compressor and liquid fluid (F) drains out of the compressor into the active part (8B) of the circuit.

## Revendications

1. Procédé pour l'exploitation d'une installation de climatisation (1) d'un véhicule, dans lequel un fluide (F) circule dans un circuit (8) pouvant être exploité en mode de refroidissement ou mode de chauffage pour le conditionnement d'un flux d'air (2), le circuit comprenant en mode de chauffage un compresseur (26), un échangeur de chaleur (24) et un accumulateur intermédiaire (28), **caractérisé en ce que** le circuit est commandé de telle sorte que la pression d'aspiration du compresseur (26) dépasse au moins partiellement une pression de saturation due à la température ambiante dans le circuit.

2. Procédé selon la revendication 1, **caractérisé en ce que** le mode de chauffage correspond à un fonctionnement du circuit dans un processus triangulaire à rotation à droite, dans lequel la sortie du compresseur est reliée à une entrée d'une vanne de commande 38a, qui est reliée côté sortie à l'échangeur de chaleur (24) en aval duquel sont montés côté sortie l'accumulateur intermédiaire (28) et l'entrée du compresseur (26).

3. Procédé selon la revendication 1 ou 2, **caractérisé en ce que** la pression d'aspiration peut être commandée dans une plage de 10 bars à 110 bars.

4. Procédé selon l'une quelconque des revendications 1, 2 ou 3, **caractérisé en ce que** le fluide (F) peut être divisé dans le circuit en mode de chauffage entre au moins une partie (8B) active et au moins une partie (8A) passive.

5. Procédé selon l'une quelconque des revendications 1 à 4, **caractérisé en ce que**, avec l'activation du mode de chauffage, le fluide (F) est guidé depuis la partie passive du circuit (8A) dans la partie active du circuit (8B).

6. Procédé selon l'une quelconque des revendications 1 à 5, **caractérisé en ce que**, en cas de sous-dépassement d'une valeur seuil prédéfinissable pour la pression d'aspiration dans la partie active du circuit (8B), le fluide (F) est guidé depuis la partie passive du circuit (8A) dans la partie active du circuit (8B).

7. Procédé selon l'une quelconque des revendications 5 ou 6, **caractérisé en ce que**, pour le transfert du fluide de la partie passive du circuit dans la partie active du circuit, le circuit exploité en mode de chauffage est commuté dans le mode de refroidissement.

8. Procédé selon l'une quelconque des revendications 5 ou 6, **caractérisé en ce que**, pour le transfert du fluide de la partie passive du circuit dans la partie active du circuit, le circuit exploité en mode de chauffage est commuté dans un processus triangulaire à rotation à gauche.

9. Procédé selon l'une quelconque des revendications 7 ou 8, **caractérisé en ce que** le circuit peut être exploité en mode de refroidissement ou dans le processus triangulaire à rotation à gauche jusqu'au sous-dépassement d'une valeur seuil réglable, le circuit pouvant être commuté à nouveau dans le mode de chauffage après le sous-dépassement de la valeur seuil.

10. Procédé selon la revendication 9, **caractérisé en ce que** la valeur seuil pour une pression d'aspiration et/ou pour une pression élevée et/ou pour une température de gaz brûlé est prédéfinissable sur le compresseur.

11. Procédé selon la revendication 9, **caractérisé en ce que** la valeur seuil de la pression d'aspiration est réglée sur au moins 3 bars, de préférence 5 bars, au-dessous de la valeur, de la pression de saturation ladite valeur étant fonction de la température ambiante.

12. Procédé selon l'une quelconque des revendications 7 à 11, **caractérisé en ce que** le circuit peut être exploité pour une durée prédéfinissable en mode de refroidissement ou dans le processus triangulaire à rotation à gauche, le circuit pouvant être commuté à nouveau dans le mode de chauffage après l'écoulement de la durée.

13. Procédé selon l'une quelconque des revendications 7 à 12, **caractérisé en ce que**, après la commutation dans le mode de refroidissement ou dans le processus triangulaire à rotation à gauche, un flux d'air (2) peut être réduit par l'évaporateur.

14. Procédé selon l'une quelconque des revendications 7 à 13, **caractérisé en ce que**, après la commutation dans le mode de refroidissement ou dans le processus triangulaire à rotation à gauche, un flux d'air peut être réduit par un refroidisseur à gaz.

15. Procédé selon l'une quelconque des revendications 10 à 14, **caractérisé en ce que**, après le retour dans le mode de chauffage, un équilibre de pression peut être réalisé dans le circuit.

16. Installation de climatisation (1) pour un véhicule avec un circuit (8) pouvant être exploité en mode de refroidissement ou en mode de chauffage pour la circulation d'un fluide (F) pour le conditionnement d'un flux d'air (2), et l'installation de climatisation étant conçue et aménagée de telle sorte que le circuit comprend en mode de chauffage un échangeur de chaleur (24), un accumulateur intermédiaire (28) et un compresseur (26) pour le stockage intermédiaire ou pour la compression du fluide (F), **caractérisée en ce qu'**on obtient sur le compresseur une pression d'aspiration qui est supérieure à la pression de saturation dans le circuit (8), laquelle pression de saturation étant fonction de la température ambiante.

17. Installation de climatisation (1) selon la revendication 16, **caractérisée en ce qu'**il est prévu un évaporateur (6) branché côté secondaire dans le canal d'écoulement (4) du flux d'air (2) et côté primaire dans le circuit (8), lequel évaporateur est relié dans le circuit (8) côté sortie à l'accumulateur intermédiaire (28) avec l'insertion d'une vanne anti-retour (36).

18. Installation de climatisation (1) selon la revendication 17, **caractérisée en ce que** le volume de l'évaporateur (6) pour l'absorption de fluide est inférieur au volume de stockage de l'accumulateur intermédiaire (28).

19. Installation de climatisation (1) selon la revendication 18, **caractérisée en ce que** le rapport entre le volume de stockage de l'accumulateur intermédiaire et le volume de l'évaporateur se situe dans une plage de 2:1 à 20:1, de préférence dans une plage comprise entre 2:1 et 10:1.

20. Installation de climatisation (1) selon l'une quelconque des revendications 16 à 19, sur laquelle un dispositif de commande (38B) est disposé entre l'échangeur de chaleur (24) et l'accumulateur intermédiaire (28).

21. Installation de climatisation (1) selon l'une quelconque des revendications 16 à 20, sur laquelle un capteur de pression est attribué côté aspiration au compresseur (26).

22. Installation de climatisation (1) selon l'une quelconque des revendications 16 à 21, sur lequel le circuit (8) est subdivisé en au moins une partie active et au moins une partie passive.

23. Installation de climatisation (1) selon la revendication 22, sur laquelle la partie active est reliée au moyen d'un autre dispositif de commande (38C) à la partie passive, le dispositif de commande (38C) étant ouvert lorsque la quantité de fluide dans la partie active du circuit dépasse une valeur seuil prédéfinissable.

24. Installation de climatisation (1) selon l'une quelconque des revendications 19 à 23, sur laquelle le compresseur (26) côté sortie est relié à l'évaporateur (6) côté entrée, par le biais d'un moyen de commande (42) et d'une conduite de liaison (40), du fluide (F) gazeux étant arrivé dans l'évaporateur après l'ouverture du moyen de commande et du fluide (F) liquide sortant de l'évaporateur refoulant depuis l'évaporateur dans la partie (8B) active du circuit.
